# EUROPÄISCHE PATENTSCHRIFT

(11) **EP 1 035 740 B1**
(45) Veröffentlichungstag und Bekanntmachung des Hinweises auf die Patenterteilung: **26.05.2004**
(21) Anmeldenummer: 00104817.2
(22) Anmeldetag: 06.03.2000
(51) Int. Cl.: H04Q 7/32

(54) **Verfahren und Funk-Kommunikationsnetz zur Sicherung eines in einer Mobilstation angeordneten Teilnehmeridentitätsmoduls**
Method and radio communication network for securing the SIM card in a mobile station
Procédé et réseau de radiocommunication pour sécuriser la module d'identification d'abonné

(30) Priorität: 09.03.1999 DE 19910385
(43) Veröffentlichungstag der Anmeldung: 13.09.2000
(73) Patentinhaber: SIEMENS AKTIENGESELLSCHAFT, 80333 München (DE)
(72) Erfinder: Verstraete, Hans, 2220 Heist op den Berg (BE)

(56) Entgegenhaltungen:
- WO-A-98/41050
- DE-A- 19 818 846

## Beschreibung

Die Erfindung betrifft ein Verfahren zur Sicherung eines in einer Mobilstation angeordneten Teilnehmeridentitätsmoduls, durch das ein mobiler Teilnehmer gegenüber einem Funk-Kommunikationsnetz identifizierbar ist, sowie ein entsprechendes Funk-Kommunikationsnetz.

Bekanntlich gibt es in einem Funk-Kommunikationsnetz - wie beispielsweise dem nach dem GSM-Standard - mehrere Arten von Sicherheitsfunktionen. So ist in der EP-0 822 727 A2 ein Verfahren und ein System beschrieben, bei dem mobile Teilnehmer sich mit einem Teilnehmeridentitätsmodul - auch als SIM-Karte (Subscriber Identity Module) oder Chip-Karte bezeichnet - gegenüber dem Netz identifizieren. Das Teilnehmeridentitätsmodul befindet sich üblicherweise in der vom Teilnehmer benutzten Mobilstation.

Darüber hinaus ist es allgemein bekannt, dass die Mobilstation bei einem Wechsel des mobilen Teilnehmers von einem Versorgungsgebiet in ein anderes Versorgungsgebiet eine Aktualisierung der Betreuung des Teilnehmers initiiert (location update) und dass netzseitig in einer bisher zuständigen Teilnehmerdatenbasis - z.B. in einem Besucherregister (visitor location register), das dem alten Versorgungsgebiet zugeordnet ist - gespeicherte Daten des Teilnehmers gelöscht werden. Die Aufforderung zum Löschen der Teilnehmerdaten (cancel location) an die bisherige Teilnehmerdatenbasis wird von einer weiteren Teilnehmerdatenbasis - z.B. dem Heimatregister (home location register) - im Netz veranlasst.

Für den Fall, dass das Teilnehmeridentitätsmodul "geknackt" wird, haben Dritte die Möglichkeit eines unberechtigten "Klonens" (SIM-card cloning), was dazu führt, dass der Unberechtigte Sprach- und Datenverbindungen mit der nachgeahmten Karte auf Kosten des Karteninhabers nutzen kann. Vor allem aber bemerkt der Karteninhaber den Missbrauch seines Teilnehmeridentitätsmoduls - wenn überhaupt - frühesetens bei der Abrechnung, und er oder der Netzbetreiber kann darüber hinaus den Verursacher des Missbrauchs nicht ohne weiteres ermitteln. Das Funk-Kommunikationsnetz üblicher Art und Weise überprüft nicht, ob mehr als ein mobiler Teilnehmer mit derselben Identität im Netz aktiv sind.

WO-98 41050 offenbart ein Verfahren zum Erkennen von geklonten SIM-Karten wobei die Anzahl von Zellenwechseln betrachtet wird.

Aufgabe der vorliegenden Erfindung ist es, ein Verfahren und ein Funk-Kommunikationsnetz anzu, durch das eine bessere Sicherung des Teilnehmeridentitätsmoduls gegen Missbrauch erzielbar ist.

Diese Aufgabe wird gemäß der Erfindung durch die Merkmale des Patentanspruchs 1 hinsichtlich des Verfahrens und durch die Merkmale des Patentanspruchs 8 hinsichtlich des Funk-Kommunikationsnetzes gelöst.

Ausgehend davon, dass mobilstationsseitig eine Aktualisierung der Betreuung des Teilnehmers bei einem Wechsel des Versorgungsgebiets in einem Funk-Kommunikationsnetz initiiert wird und netzseitig in einer bisher zuständigen Teilnehmerdatenbasis gespeicherte Daten des Teilnehmers gelöscht werden, wird gemäß dem Gegenstand der Erfindung netzseitig eine Funkrufnachricht zusätzlich in das alte Versorgungsgebiet zu Mobilstationen ausgesendet. Bei Beantwortung der Funkrufnachricht durch zumindest eine Mobilstation wird die von dieser Mobilstation ankommende Mobilteilnehmerkennung ausgewertet.

Durch die zusätzliche Funkrufnachricht (Paging) in das alte Versorgungsgebiet, in dem sich der mobile Teilnehmer aber gar nicht mehr aufhält, prüft das Netz, ob eine weitere Mobilstation noch aktiv ist und auf das "Paging" mit derselben Teilnehmerkennung wie die des berechtigten Teilnehmers antwortet. Ist dies der Fall, liefert die Auswertung der empfangenen Teilnehmerkennung einen Hinweis auf zumindest eine weitere unberechtigterweise mit dem gleichen Teilnehmeridentitätsmodul aktive Mobilstation, sodass weitere Schritte gegen den Missbrauch des Teilnehmeridentitätsmoduls in dieser Mobilstation und somit gegen den Verursacher vom Teilnehmer oder vom Netzbetreiber initiiert werden können. Damit ergibt sich ein sicherer Schutz gegen das unberechtigte Zugreifen (cloning) auf das allein dem Kartennutzer vorbehaltene Teilnehmeridentitätsmodul. Ein weiterer Vorteil der Erfindung besteht darin, durch das Aufdecken der "geklonten" SIM-Karte nicht beweisfähige Diskussionen über unkorrekte weil zu hohe Abrechnungen seitens des Netzbetreibers zu vermeiden.

Als günstig hat sich gemäß einer Weiterbildung der Erfindung erwiesen, dass eine Ortsinformation über den mobilen Teilnehmer bei Beantwortung der Funkrufnachricht von der Mobilstation zusammen mit der Teilnehmerkennung gesendet und netzseitig ausgewertet wird. Damit gewinnt man zusätzlich zu der Information über die unberechtigterweise benutzte SIM-Karte auch eine Information über den Aufenthaltsort, was den raschen Zugriff auf den einen Kartenmissbrauch ausübenden Benutzer der weiteren Mobilstation ermöglicht.

Von Vorteil ist es gemäß einer anderen Weiterbildung der Erfindung auch, wenn von einer Bedienungs- und Wartungseinheit des Funk-Kommunikationsnetzes die Auswertung der empfangenen Informationen vorgenommen und das Ergebnis der Auswertung dem Netzbetreiber des Funk-Kommunikationsnetzes zur Sicherung des Teilnehmeridentitätsmoduls gegen Missbrauch übermittelt wird. Damit kann direkt zu einer übergeordneten Einrichtung, zu der der Netzbetreiber einen unmittelbaren Zugriff hat, die Information über einen eventuellen Missbrauch weitergeleitet und entsprechende Massnahmen zur Filterung des unberechtigten Teilnehmers vom Netzbetreiber ergriffen werden.

Vorzugsweise wird gemäß einer weiteren Ausgestaltung für den Netzbetreiber eine Liste von Teilnehmerkennungen der Mobilstationen, die eine Antwort auf die im alten Versorgungsgebiet empfangene Funkrufnachricht senden, erzeugt.

Als besonders günstig hat sich gemäß einer anderen Weiterbildung der Erfindung erwiesen, wenn netzseitig für den mobilen Teilnehmer ein Zähler zur Ermittlung der Anzahl der Wechsel des Versorgungsgebiets eingerichtet wird und das zusätzliche Senden der Funkrufnachricht in das alte Versorgungsgebiet abhängig vom Erreichen eines vorgebbaren Zählwerts gesteuert wird. Damit vermeidet man eine dynamische Last auf der Funkschnittstelle, die im alten Gebiet durch das zusätzliche "Paging" zu Sicherungszwecken gegebenenfalls entstehen könnte. Nicht bei jeder Aktualisierung der Betreuung des mobilen Teilnehmers durch Wechsel des Versorgungsgebiets, sondern erst bei Erreichen des Zählwerts - entsprechend einem Schwellwert - wird das zusätzliche "Paging" in das alte Gebiet initiiert.

Vorzugsweise wird der Zähler in einer Teilnehmerdatenbasis des Funk-Kommunikationsnetzes eingerichtet, die das Löschen der in der bisher zuständigen Teilnehmerdatenbasis gespeicherten Daten veranlasst und bei Erreichen des Zählwerts ein Steuerzeichen mitsendet, durch das die bisher zuständige Teilnehmerdatenbasis zum Senden der zusätzlichen Funkrufnachricht aufgefordert wird.

Gemäß einer weiteren alternativen Ausgestaltung der Erfindung ist netzseitig das zusätzliche Senden der Funkrufnachricht in das alte Versorgungsgebiet abhängig von der Verkehrslast in diesem Versorgungsgebiet steuerbar. Dies bedeutet die Realisierung einer Einschalt-Ausschalt-Funktionalität für das zusätzliche "Paging" in das alte Versorgungsgebiet, was bei hoher Verkehrslast ein Abschalten der Möglichkeit des "Pagens" und bei niedriger Verkehrslast ein Einschalten der Möglichkeit des "Pagens" - z.B. durch den Netzbetreiber - bewirkt.

Die Erfindung wird anhand eines in einer Figur dargestellten Ausführungsbeispiels näher erläutert, die den Nachrichtenfluß zwischen Mobilstationen und Netzeinrichtungen eines Funk-Kommunikationsnetzes zeigt.

Ein mobiler Teilnehmer nutzt eine Mobilstation MS bekanntlich zur Kommunikation mit anderen Teilnehmern eines Kommunikationsnetzes oder mit deren Netzeinrichtungen. Über eine Funkschnittstelle eines s vorzugsweise zellular aufgebauten Funk-Kommunikationsnetzes werden Informationen über Kommunikationsverbindungen zwischen der Mobilstation MS und den Netzeinrichtungen in beiden Übertragungsrichtungen (downlink, uplink) ausgetauscht. Das Funk-Kommunikationsnetz kann beispielsweise ein heutiges GSM-Netz, aber auch ein zukünftiges UMTS-Netz (Universal Mobile Telecommunication System) oder ein sonstiges Netz sein. Zum Senden und Empfangen von Funksignalen, die Sprache und Daten enthalten können, weist die Mobilstation MS Sende-Empfangs-Einrichtungen auf. Mit den Sende-Empfangs-Einrichtungen sind üblicherweise zumindest eine Steuereinrichtung und eine Speichereinrichtung verbunden. Eingangsseitig verfügt jede Mobilstation MS über eine Ein-Ausgabe-Schnittstelle, die im vorliegenden Beispiel insbesondere die Teilnehmereingaben eines Benutzers, der ein mobiler Teilnehmer und üblicherweise der Inhaber des Endgeräts ist, empfängt. Ausgangsseitig ist ein Teilnehmeridentitätsmodul SIM (Subscriber Identity Module) angeschlossen, das auch als SIM-Karte bezeichnet und üblicherweise als Chipkarte ausgebildet ist. Der mobile Teilnehmer kann sich mit dem Teilnehmeridentitätsmodul gegenüber dem jeweiligen Netz, in dem er registriert ist, identifizieren. Zum eindeutigen Identifizieren speichert das Teilnehmeridentitätsmodul teilnehmerbezogene Daten ab.

Das Funk-Kommunikationsnetz gliedert sich im vorliegenden Beispiel in ein an der Funkschnittstelle angeordnetes Funkteilsystem BSS (Base Station Subsystem) mit jeweils mindestens eine Funkzelle bedienenden Basisstationen - an die Basisstationssteuerungen angeschlossen sind - und ein mit dem Funkteilsystem verbundenes Vermittlungsteilsystem mit Teilnehmerdatenbasen - den Besucherregistern NVLR (New Visitor Location Register) und OVLR (Old Visitor Location Register) und zumindest einem Heimatregister HLR (Home Location Register) - sowie jeweils der Teilnehmerdatenbasis NVLR, OVLR zugeordneten Vermittlungsstellen MSC (Mobile Switching Center).

Es kommt häufig vor, dass sich der mobile Teilnehmer mit seiner Mobilstation MS von einem ursprünglichen Versorgungsgebiet - z.B. einer Funkzelle OLDC - in ein neues Versorgungsgebiet - z.B. einer Funkzelle NEWC - bewegt und daher die Mobilstation MS entscheidet, eine Aktualisierung der Betreuung durch den Wechsel des Versorgungsgebiets zu starten. In der Funkzelle NEWC sendet sie daher eine Aktualisierungsnachricht LUP (Location Update) über das entsprechende Funkteilsystem BSS zu der netzseitig zuständigen Vermittlungsstelle MSC mit angeschlossenem neuen Besucherregister NVLR. In der Aktualisierungsnachricht LUP sind zur Identifizierung eine temporäre Mobilteilnehmerkennung TMSI (Temporary Mobile Subscriber Identity) sowie eine bisher gültige Ortsinformation LAI - z.B. eine Gebietskennung - enthalten.

Das neue Besucherregister NVLR erzeugt und sendet daraufhin eine Nachricht SENDP an das alte Besucherregister OVLR, mit der sie die internationale Mobilteilnehmerkennung IMSI (International Mobile Subscriber Identity) sowie die Sicherheitsparameter PAR, die zur Teilnehmerauthentifikation benötigt werden, abfrägt. In einer Antwortnachricht RESP übermittelt das alte Besucherregister OVLR diese Daten IMSI und PAR, sodass das neue Besucherregister NVLR die Teilnehmerauthentifikation nach bekannter Art und Weise mit Hilfe der empfangenen Daten vornimmt. Danach erzeugt und sendet das neue Besucherregister NVLR eine Anforderungsnachricht REQSD an das Heimatregister HLR, die durch Übertragung der im Heimatregister HLR für den mobilen Teilnehmer gespeicherten Daten SDATA an das neue Besucherregister NVLR beantwortet wird.

Die Aktualisierungsprozedur wird bekanntermaßen durch das Heimatregister HLR fortgeführt, indem es das Entfernen der im alten Besucherregister OVLR für den mobilen Teilnehmer eingetragenen Daten veranlasst - siehe nachfolgende Löschnachricht CCLO (cancel location) an das alte Besucherregister OVLR. Vorzugsweise wird in dem Heimatregister HLR für den mobilen Teilnehmer ein Zähler CT zur Ermittlung der Anzahl der Wechsel des Versorgungsgebiets und damit der Anzahl der erforderlichen Aktualisierungsprozeduren eingerichtet und dessen aktueller Zählerstand mit einem vorgebbaren Zählwert MAX - der einem Schwellwert gleicht - verglichen. Bei Erreichen dieses Zählwerts MAX setzt das Heimatregister HLR ein Steuerzeichen FL und sendet es in der Nachricht CCLO zum bisher zuständigen Besucherregister OVLR. Durch Auswertung des eintrefenden Nachrichteninhalts erkennt das alte Besucherregister OVLR das Steuerzeichen FL und veranlasst gemäß dem Gegenstand der Erfindung das Aussenden einer Funkrufnachricht PAGE (paging) zusätzlich in das alte Versorgungsgebiet - d.h. im vorliegenden Beispiel in die Funkzelle OLDC - zu den darin sich aufhaltenden Mobilstationen MS (downlink). Das Senden der Funkrufnachricht erfolgt - wie bei jedem "Paging" - über die entsprechende Basisstation des Funkteilsystem BSS. Der Einsatz des Zählers CT zur Steuerung des Sendezeitpunkts für die zusätzliche Funkrufnachricht hat den Vorteil, dass die Funkrufnachricht nicht bei jeder Löschnachricht CCLO, sondern erst bei gesetztem Steuerzeichen FL nach Erreichen des Schwellwerts MAX - beispielsweise nach jeder fünften Aktualisierungsprozedur mit entsprechender Löschnachricht - zusätzlich in das bisherige Versorgungsgebiet gesendet wird. Damit läßt sich eine dynamische Last auf der Funkschnittstelle vermeiden, die im alten Versorgungsgebiet durch das zusätzliche "Paging" zu Sicherungszwecken gegebenenfalls entstehen könnte.

Gemäß einer Variante der Erfindung kann netzseitig das zusätzliche Senden der Funkrufnachricht PAGE in das alte Versorgungsgebiet abhängig von der Verkehrslast in diesem Versorgungsgebiet gesteuert werden - z.B. von der für dieses alte Versorgungsgebiet zuständigen Basisstation oder der damit verbundenen Basisstationssteuerung des Funkteilsystems BSS. Dies bedeutet die Realisierung einer Einschalt-Ausschalt-Funktionalität für das zusätzliche "Paging" in das alte Versorgungsgebiet, was bei hoher Verkehrslast ein Abschalten der Möglichkeit des "Pagens" und bei niedriger Verkehrslast ein Einschalten der Möglichkeit des "Pagens" - z.B. durch Initiative des Netzbetreibers - bewirkt.

Für den Fall, dass eine der Mobilstationen MS in der Funkzelle OLDC, die die Funkrufnachricht PAGE empfangen haben, reagiert und in der Gegenrichtung (uplink) eine Antwortnachricht PRESP sendet, die mindestens die Teilnehmerkennung IMSI und vorzugsweise die Ortsinformation LAI enthält, erfolgt gemäß dem Gegenstand der Erfindung eine netzseitige Auswertung der ankommenden Teilnehmerkennung IMSI. Dazu generiert die zum bisher zuständigen Besucherregister OVLR gehörige Vermittlungsstelle MSC eine Nachricht NOTI, in der die Teilnehmerkennung IMSI zusammen mit der Ortsinformation LAI enthalten ist, und sendet sie zu einer übergeordneten Netzeinrichtung, vorzugsweise zu der Bedienungs- und Wartungseinheit OMC des Funk-Kommunikationsnetzes. Diese Netzeinrichtung vollzieht die Auswertung der empfangenen Informationen IMSI, LAI vorgenommen und übermittelt das Ergebnis der Auswertung dem Netzbetreiber des Funk-Kommunikationsnetzes, der daraufhin Maßnahmen zur Sicherung des Teilnehmeridentitätsmoduls gegen Missbrauch - beispielsweise durch Information des berechtigten Kartennutzers, durch Sperren der Karte, durch Zugriff auf den unberechtigten Benutzer der "geklonten" SIM-Karte usw. - ergreift.

Vorzugsweise erstellt das jeweilige alte Besucherregister OVLR mit zugehöriger Vermittlungsstelle MSC für den Netzbetreiber eine - vorzugsweise fortlaufende - Liste LIST von Teilnehmerkennungen IMSI der Mobilstationen, die jeweils Antwortnachrichten PRESP auf die im alten Versorgungsgebiet empfangene Funkrufnachricht PAGE senden.

Die Aktualisierungsprozedur wird bekanntermaßen durch das für den mobilen Teilnehmer aktuell zuständige Besucherregister NVLR abgeschlossen, indem es eine neue temporäre Mobilteilnehmerkennung TMSI vergibt und in einer Nachricht SEND über die entsprechende Basisstation des Funkteilsystems BSS an die Mobilstation MS in der Funkzelle NEWC aussendet.

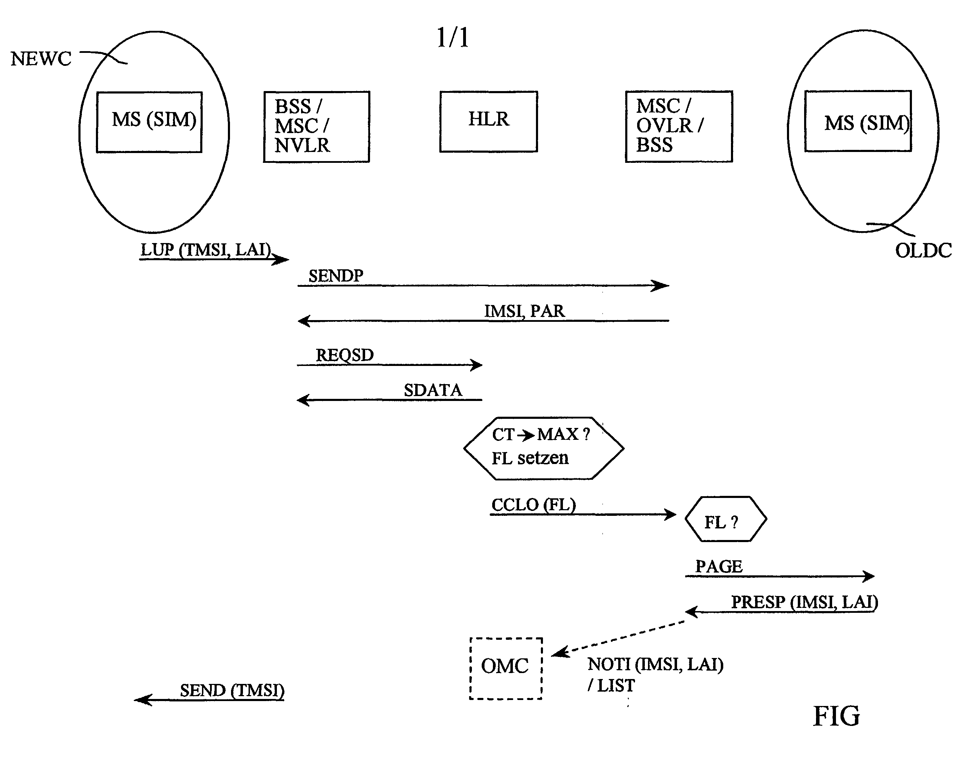

## Patentansprüche

1. Verfahren zur Sicherung eines in einer Mobilstation (MT) angeordneten Teilnehmeridentitätsmoduls (SIM), durch das ein mobiler Teilnehmer gegenüber einem Funk-Kommunikationsnetz identifizierbar ist, in dem mobilstationsseitig eine Aktualisierung der Betreuung des Teilnehmers bei einem Wechsel von einem alten Versorgungsgebiet (OLDC) in ein neues Versorgungsgebiet (NEWC) initiiert wird und netzseitig in einer bisher zuständigen Teilnehmerdatenbasis (OVLR) gespeicherte Daten des Teilnehmers gelöscht werden, bei dem
netzseitig eine Funkrufnachricht (PAGE) zusätzlich in das alte Versorgungsgebiet (OLDC) zu Mobilstationen ausgesendet wird und bei Beantwortung der Funkrufnachricht (PAGE) durch zumindest eine Mobilstation die von dieser Mobilstation ankommende Mobilteileilnehmerkennung (IMSI) ausgewertet wird.

2. Verfahren nach Anspruch 1, bei dem
eine Ortsinformation (LAI) über den mobilen Teilnehmer bei Beantwortung der Funkrufnachricht (PAGE) von der Mobilstation zusammen mit der Teilnehmerkennung (IMSI) gesendet und netzseitig ausgewertet wird.

3. Verfahren nach Anspruch 1 oder 2, bei dem
von einer Bedienungs- und Wartungseinheit (OMC) des Funk-Kommunikationsnetzes die Auswertung der empfangenen Informationen vorgenommen (IMSI, LAI) und das Ergebnis der Auswertung dem Netzbetreiber des Funk-Kommunikationsnetzes zur Sicherung des Teilnehmeridentitätsmoduls (SIM) gegen Missbrauch übermittelt wird.

4. Verfahren nach einem der vorhergehenden Ansprüche,
**dadurch gekennzeichnet,**
**dass** für den Netzbetreiber eine Liste von (LIST) Teilnehmerkennungen der Mobilstationen, die eine Antwort auf die im alten Versorgungsgebiet (OLDC) empfangene Funkrufnachricht (PAGE) senden, erzeugt wird.

5. Verfahren nach einem der vorhergehenden Ansprüche, bei dem
- netzseitig für den mobilen Teilnehmer ein Zähler (CT) zur Ermittlung der Anzahl der Wechsel des Versorgungsgebiets eingerichtet wird, und
- das zusätzliche Senden der Funkrufnachricht (PAGE) in das alte Versorgungsgebiet (OLDC) abhängig vom Erreichen eines vorgebbaren Zählwerts (MAX) gesteuert wird.

6. Verfahren nach Anspruch 5, bei dem
der Zähler (CT) in einer Teilnehmerdatenbasis (HLR) des Funk-Kommunikationsnetzes eingerichtet wird, die
- das Löschen der in der bisher zuständigen Teilnehmerdatenbasis (OVLR) gespeicherten Daten veranlasst und
- bei Erreichen des vorgebbaren Zählwerts (MAX) ein Steuerzeichen (FL) setzt und mitsendet, durch das die bisher zuständige Teilnehmerdatenbasis (OVLR) zum Senden der zusätzlichen Funkrufnachricht (PAGE) aufgefordert wird.

7. Verfahren nach einem der Ansprüche 1 bis 4, bei dem
netzseitig das zusätzliche Senden der Funkrufnachricht (PAGE) in das alte Versorgungsgebiet (OLDC) abhängig von der Verkehrslast in diesem Versorgungsgebiet steuerbar ist.

8. Funk-Kommunikationsnetz zur Sicherung eines in einer Mobilstation (MS) angeordneten Teilnehmeridentitätsmoduls (SIM), durch das ein mobiler Teilnehmer gegenüber dem Funk-Kommunikationsnetz identifizierbar ist, wobei mobilstationsseitig eine Aktualisierung der Betreuung des Teilnehmers bei dessen Wechsel von einem alten Versorgungsgebiet (OLDC) in ein neues Versorgungsgebiet (NEWC) initiiert wird und netzseitig in einer bisher zuständigen Teilnehmerdatenbasis (OVLR) gespeicherte Daten des Teilnehmers gelöscht werden, mit
- netzseitigen Mitteln (OVLR, BSS) zum Aussenden einer Funkrufnachricht (PAGE) zusätzlich in das alte Versorgungsgebiet (OLDC) zu Mobilstationen und mit
- netzseitigen Mitteln (OMC) zum Auswerten einer bei Beantwortung der Funkrufnachricht (PAGE) durch zumindest eine Mobilstation ankommenden Mobilteilnehmerkennung (IMSI).

9. Funk-Kommunikationsnetz nach Anspruch 8, mit mobilstationsseitigen Mitteln zum Senden einer Ortsinformation (LAI) über den mobilen Teilnehmer bei Beantwortung der Funkrufnachricht (PAGE) zusammen mit der Mobilteilnehmerkennung (IMSI) und mit netzseitgen Mitteln (OMC) zum Auswerten der Ortsinformation (LAI).

10. Funk-Kommunikationsnetz nach Anspruch 8 oder 9, mit einer Bedienungs- und Wartungseinheit (OMC) des Funk-Kommunikationsnetzes zur Auswertung der empfangenen Informationen (IMSI, LAI) und zur Übermittlung des Ergebnisses der Auswertung an den Netzbetreiber des Funk-Kommunikationsnetzes zur Sicherung des Teilnehmeridentitätsmoduls (SIM) gegen Missbrauch.

## Claims

1. Method for protection of a subscriber identity module (SIM) which is arranged in a mobile station (MT) and by means of which a mobile subscriber can be identified in a radio communication network in which updating of the management of the subscriber is initiated at the mobile station end when a change takes place from an old supply area (OLDC) to a new supply area (NEWC), and subscriber data stored in a previously responsible subscriber database (OVLR) are cancelled at the network end, in which method a radio paging message (PAGE) is additionally transmitted at the network end to mobile stations in the old supply area (OLDC) and, if at least one mobile station responds to the radio paging message (PAGE), the mobile subscriber identity (IMSI) arriving from this mobile station is evaluated.

2. Method according to Claim 1, in which
location information (LAI) about the mobile subscriber is transmitted together with the subscriber identity (IMSI) by the mobile station when responding to the radio paging message (PAGE), and is evaluated at the network end.

3. Method according to Claim 1 or 2, in which
the evaluation of the received information is carried out (IMSI, LAI) by an operation and maintenance centre (LMC) in the radio communication network, and the result of the evaluation is transmitted to the network operator of the radio communication network, in order to protect the subscriber identity module (SIM) against misuse.

4. Method according to one of the preceding claims, **characterized**
**in that** a list of (LIST) subscriber identities of those mobile stations which transmit a response to the radio paging message (PAGE) received in the old supply area (OLDC) is produced for the network operator.

5. Method according to one of the preceding claims, in which
- a counter (CT) for determining the number of changes in the supply area is set up at the network end for the mobile subscriber, and
- the additional transmission of the radio paging message (PAGE) to the old supply area (OLDC) is controlled as a function of a count (MAX) which can be predetermined being reached.

6. Method according to Claim 5, in which
the counter (CT) is set up in a subscriber database (HLR) in the radio communication network, which database
- initiates the cancelling of the data stored in the previously responsible subscriber database (OVLR) and
- on reaching the count (MAX) which can be predetermined, sets and also transmits a control character (FL), by means of which the previously responsible subscriber database (OVLR) is requested to transmit the additional radio paging message (PAGE).

7. Method according to one of Claims 1 to 4, in which,
at the network end, the additional transmission of the radio paging message (PAGE) to the old supply area (OLDC) can be controlled as a function of the traffic load in this supply area.

8. Radio communication network for protection of a subscriber identity module (SIM) which is arranged in a mobile station (MS), by means of which a mobile subscriber can be identified in the radio communication network, with updating of the management of the subscriber being initiated at the mobile station end when the subscriber changes from an old supply area (OLDC) to a new supply area (NEWC), and subscriber data stored in a previously responsible subscriber database (OVLR) are cancelled at the network end, having
- means (OVLR, BSS) at the network end for additionally transmitting a radio paging message (PAGE) to mobile stations in the old supply area (OLDC), and having,
- means (OMC) at the network end for evaluation of a mobile subscriber identity (IMSI) which arrives when at least one mobile station responds to the radio paging message (PAGE).

9. Radio communication network according to Claim 8, having
means at the mobile station end for transmitting location information (LAI) about the mobile subscriber, together with the mobile subscriber identity (IMSI), when responding to the radio paging message (PAGE), and having means (OMC) at the network end for evaluation of the location information (LAI).

10. Radio communication network according to Claim 8 or 9, having
an operation and maintenance centre (OMC) in the radio communication network for evaluation of the received information (IMSI, LAI) and for transmission of the result of the evaluation to the network operator of the radio communication network, in order to protect the subscriber identity module (SIM) against misuse.

## Revendications

1. Procédé de protection d'un module d'identité d'abonné (SIM) situé dans un poste mobile (MT) et permettant d'identifier un abonné mobile sur un réseau de télécommunication, dans lequel une actualisation du suivi de l'abonné lors d'un passage d'une ancienne zone de couverture (OLDC) à une nouvelle zone de couverture (NEWC) est amorcée du côté du poste mobile et des données relatives à l'abonné mémorisées dans une base de données d'abonnés (OVLR) jusqu'à présent valide sont effacées du côté du réseau, un message radioélectrique d'appel (PAGE) étant en plus envoyé aux postes mobiles de l'ancienne zone de couverture (OLDC) du côté du réseau et au moins un poste exploitant lors de la réponse au message radioélectrique d'appel l'identification d'abonné mobile provenant de ce poste mobile (IMSI).

2. Procédé selon la revendication 1, dans lequel une information locale (LAI) sur l'abonné mobile est envoyée conjointement avec l'identification d'abonné (IMSI) par la station mobile lors de la réponse au message radioélectrique d'appel (PAGE) et est exploitée du côté du réseau.

3. Procédé selon la revendication 1 ou 2, dans lequel l'exploitation des informations reçues est effectuée (IMSI, LAI) par une unité de service et de surveillance (OMC) du réseau de télécommunication et le résultat de l'exploitation est transmis à l'exploitant du réseau de télécommunication en vue de protéger le module d'identité d'abonné (SIM) contre une utilisation frauduleuse.

4. Procédé selon l'une des revendications précédentes, **caractérisé en ce qu'**une liste d'identification d'abonnés (LIST) des postes mobiles, qui envoient une réponse au message radioélectrique d'appel (PAGE) reçu dans l'ancienne zone de couverture (OLDC), est générée à destination de l'exploitation du réseau.

5. Procédé selon l'une des revendications précédentes, dans lequel
- un compteur (CT) est installé du côté du réseau à destination de l'abonné mobile en vue de déterminer le nombre de changement de zone de couverture, et
- l'émission supplémentaire du message radioélectrique d'appel (PAGE) dans l'ancienne zone de couverture (OLDC) est commandée en fonction de l'obtention d'une valeur de comptage prédéterminée (MAX).

6. Procédé selon la revendication 5, dans lequel le compteur (CT) est installé dans une base de données d'abonnés (HLR) du réseau de télécommunication qui
- provoque l'effacement des données mémorisées dans la base de données d'abonnés (OVLR) jusqu'à présent valide et
- délivre et envoie, lors de l'obtention de la valeur de comptage prédéterminée (MAX), un caractère de commande (FL) demandant à la base de données d'abonnés (OVLR) jusqu'à présent valide d'envoyer le message radioélectrique d'appel (PAGE) supplémentaire.

7. Procédé selon l'une des revendications 1 à 4, dans lequel l'envoi supplémentaire du message radioélectrique d'appel (PAGE) dans l'ancienne zone de couverture (OLDC) peut être commandé du côté du réseau en fonction de l'encombrement dans cette zone de couverture.

8. Réseau de télécommunication destiné à protéger un module d'identité d'abonné (SIM) situé dans un poste mobile (MT) et permettant d'identifier un abonné mobile sur un réseau de télécommunication, dans lequel une actualisation du suivi de l'abonné lors de son passage d'une ancienne zone de couverture (OLDC) à une nouvelle zone de couverture (NEWC) est amorcée du côté du poste mobile et des données relatives à l'abonné mémorisées dans une base de données d'abonnés (OVLR) jusqu'à présent valide sont effacées du côté du réseau, lequel réseau comporte
- des moyens (OVLR, BSS) situés du côté réseau et destinés à envoyer en plus un message radioélectrique d'appel (PAGE) aux postes mobiles dans l'ancienne zone de couverture (OLDC) et
- des moyens (OMC) situés du côté du réseau et destinés à exploiter une identification d'abonné mobile (IMSI) provenant d'au moins un poste mobile lors de la réponse au message radioélectrique d'appel (PAGE).

9. Réseau de télécommunication selon la revendication 8, comportant des moyens situés du côté du poste mobile et destinés à envoyer conjointement avec l'identification d'abonné mobile (IMSI) une information locale (LAI) sur l'abonné mobile lors de la réponse au message radioélectrique d'appel (PAGE) et des moyens (OMC) situés du côté du réseau et destinés à exploiter l'information locale (LAI).

10. Réseau de télécommunication selon la revendication 8 ou 9, comportant une unité de service et de surveillance (OMC) du réseau de télécommunication destinée à exploiter les informations reçues (IMSI, LAI) et à transmettre le résultat de l'exploitation à l'exploitant du réseau de télécommunication en vue de protéger le module d'identité d'abonné (SIM) contre une utilisation frauduleuse.
